# EUROPÄISCHE PATENTANMELDUNG

(11) **EP 1 719 887 A1**
(43) Veröffentlichungstag der Anmeldung: **08.11.2006**
(21) Anmeldenummer: 05405335.0
(22) Anmeldetag: 04.05.2005
(51) Int. Cl.: F02B 37/22, F02B 37/24, F02D 41/00, F02D 23/00

(54) **Auflade-Regelung für Verbrennungsmotor**

(71) Anmelder: ABB Turbo Systems AG, 5400 Baden (CH)
(72) Erfinder: Codan, Ennio, 5212 Hausen bei Brugg (CH); Bernard, Olivier, 5400 Baden (CH)
(74) Vertreter: ABB Patent Attorneys

(57) **Zusammenfassung**

Mit einer Vordralleinrichtung wird im stationären Motorbetrieb durch Erhöhung des Dralls am Verdichtereintritt in Drehrichtung des Verdichters die Drehzahllinien des Verdichters soweit verschoben, dass der stationäre Betriebspunkt des Verdichters nahezu auf der Schluckgrenze des Verdichters zu liegen kommt. Dadurch kann das Niveau des Ladedrucks auf den für den jeweiligen Motorbetriebspunkt erforderlichen Wert geregelt werden.

Bei einer plötzlichen Erhöhung der Motorlast kann durch Rückstellung des Vordrallgitters eine Ladedruckerhöhung ohne zeitaufwendige Rotorbeschleunigung erzeugt werden.

Die Vordralleinrichtung übernimmt somit gleichzeitig die Funktionen der Ladedruck- und Motorlastregelung.

## Beschreibung

### Technisches Gebiet

Die Erfindung bezieht sich auf das Gebiet der aufgeladenen Verbrennungsmotoren. Sie betrifft ein Regelungssystem für die Aufladung eines Verbrennungsmotors sowie ein Verfahren zum Betreiben eines aufgeladenen Verbrennungsmotors.

### Stand der Technik

Aufgeladene Verbrennungsmotoren, die in einem breiten Drehzahl- und Lastbereich arbeiten, brauchen in der Regel zumindest zwei Regelsysteme: eine Hauptregelung, welche die Motorleistung über die Kraftstoffzufuhr kontrolliert, und eine Hilfsregelung, welche für jeden Betriebspunkt den erforderlichen Aufladedruck vom Aufladesystem erzeugen lässt.

Während bei Dieselmotoren die Regelung von Luft- und Brennstoffmengen in einem weiten Bereich unabhängig erfolgen kann, ist bei Ottomotoren der Variationsbereich des Luft-Brennstoffverhältnisses sehr beschränkt. Aus diesem Grund erfolgt die Motorleistungsregelung praktisch über eine einzige Mengenregelung für das konstante Luft-Brennstoff-Gemisch.

Die extremsten Anforderungen werden bei kleinen Ottomotoren gefunden, wie sie etwa in Personenkraftfahrzeugen (PKW) eingesetzt werden. Hier ist typischerweise eine erste Regelung mit einem turbinenseitigen Überdruckventil (die sogenannte "Wastegate-Regelung") vorhanden, mit welcher der Ladedruck im Motordrehzahlbereich von beispielsweise 2000 bis 6000 U/min nahezu konstant gehalten werden kann sowie eine zweite Regelung mittels Drosselklappe, welche den Ladedruck auf das für den momentanen Motorbetriebspunkt erforderliche Niveau drosselt. Die Drosselklappe erzeugt gleichzeitig eine Reserve für die Beschleunigung. Solange der Turbolader den maximalen Ladedruck liefert und die Drosselklappe diesen entsprechend drosselt, kann durch Öffnen der Drosselklappe der gedrosselte Ladedruck freigegeben und eine sofortige Leistungssteigerung realisiert werden. Das bekannte Problem des Turbolochs tritt jedoch dann ein, wenn die Motorleistung so niedrig ist, dass die Turbine des Abgasturboladers, trotz geschlossenem Überdruckventil (Wastegate), nicht genügend Energie bekommt, um den maximalen Ladedruck zu liefern. In diesem Fall muss der Turboladerrotor beschleunigt werden, bevor das erforderliche Drehmoment am Motor abrufbar ist. Dies ist besonders kritisch in dem unteren Drehzahlbereich des Motors, etwa zwischen 1000-2000 U/min.

In der Vergangenheit wurden verschiedene Möglichkeit erprobt, durch zusätzliche Erzeugung von Drall in der Luftströmung am Eintritt des Verdichters des Abgasturboladers die Turboladerdrehzahl anzuheben, um die Problematik des Turbolochs zu beheben.

Bei grossen Ottomotoren, die etwa zur Stromerzeugung oder zum Antrieb von sehr grossen, stationären Maschinen eingesetzt werden, ist der Drehzahlbereich viel kleiner als bei PKW-Motoren. Der Motorwirkungsgrad spielt dabei eine viel wichtigere Rolle. Die oben beschriebenen, sowie alle anderen denkbaren Arten der Druckregelung sind mit Verlusten verbunden, weshalb sie generell bei Grossmotoren sehr beschränkt eingesetzt werden. Dafür wird das Aufladesystem für einige wenige Betriebspunkte derart ausgelegt, dass der Ladedruck ohne Regelung nur knapp über dem für den jeweiligen Betriebspunkt erforderlichen Wert liegt. Der Ladedruck wird dann mit Abgaswastegate, Luftwastegate bzw. Mischungsrezirkulation im Verdichter oder variabler Turbinengeometrie oder ähnlichen Systemen geregelt. Die Ladedruckregelung kann jedoch nicht als Leistungsregelung angesehen werden. Ist nämlich keine Ladedruckreserve vorhanden, reagiert der Motor sehr langsam auch auf kleine Laständerungen, da die Änderung des Turboladerbetriebspunktes durch Verstellung des Regelorgans immer mit einem mehr oder weniger grossen Verzug durch die Trägheiten des Systems verbunden ist. Werden die Lastsprünge grösser, kann es dann zu starkem Abbremsen des Motors kommen oder der Motor kann sogar ganz abgewürgt werden und ausschaltet.

In den meisten Fällen ist dann eben doch auch bei den grossen Motoren eine Drosselklappe vorhanden, welche die Aufgabe übernimmt, die feine und schnelle Leistungsregelung zu gewährleisten und gleichzeitig eine minimale Druckreserve einzubauen. Wie oben beschrieben steigt die Lastaufnahmefähigkeit des Motors mit zunehmendem Druckverlust über die Drosselklappe, allerdings auf Kosten des abnehmenden Motorwirkungsgrads. Die Energie zur Überwindung des Drosselklappendruckverlustes wird der Abgasenergie entnommen, d.h. die Turboladerturbine muss für eine grössere Leistung ausgelegt werden und dies wiederum erhöht den Gegendruck für die Zylinder des Motors.

### Kurze Darstellung der Erfindung

Die der Erfindung zugrundeliegende Aufgabe besteht darin, eine Regelung für einen Verbrennungsmotor zu schaffen, welche zu einer verbesserten Lastaufnahmefähigkeit des Motors und nicht zu einem erheblichen Wirkungsgradverlust im stationären Betrieb führt.

Die Aufgabe wird mit einem Regelungssystem und einem Regelungsverfahren gemäss den unabhängigen Patentansprüchen gelöst.

Mit einer Vordralleinrichtung wird erfindungsgemäss im stationären Betrieb des Verbrennungsmotors durch Erhöhung des Dralls am Verdichtereintritt in Drehrichtung des Verdichters die Drehzahllinien des Verdichters soweit verschoben, dass der stationäre Betriebspunkt des Verdichters nahezu auf der Schluckgrenze des Verdichters zu liegen kommt. Dadurch kann das Niveau des Ladedrucks direkt und ohne zusätzliche Drosselung auf den für den jeweiligen Motorbetriebspunkt erforderlichen Wert geregelt werden. Demzufolge kann bei einer sofortigen Erhöhung der Motorlast durch Rückstellung des Vordrallgitters eine Ladedruckerhöhung ohne zeitaufwendige Rotorbeschleunigung erzeugt werden.

Die Vordralleinrichtung übernimmt somit gleichzeitig die Funktionen der Ladedruck- und Motorlastregelung.

Die Lastaufnahmefähigkeit des Motors ist dann mindestens gleich gut wie die eines stark gedrosselten Motors. Da die Drosselung entfällt, ist jedoch der Motorwirkungsgrad im stationären Betrieb gleich gut wie der eines ungedrosselten Motors.

Im Falle eines Lastabwurfes kann das Pumpen des Verdichters verhindert werden, indem der Vordrall schnell erhöht wird.

### Kurze Beschreibung der Zeichnungen

Nachfolgend wird die Erfindung anhand von Figuren genauer erläutert. Hierbei zeigt
- Fig. 1: einen Schnitt durch den Verdichtereintritt eines Abgasturboladers mit einer verstellbaren Vordralleinrichtung,
- Fig. 2: eine Veranschaulichung der Ladedruckregelung mit einer Drosselklappe,
- Fig. 3: eine Veranschaulichung der Ladedruck- und Leistungsregelung mit Drall am Verdichtereingang, und
- Fig. 4: eine zweite Veranschaulichung der Regelung gemäss Fig. 3 anhand der Turboladerdrehzahl in Abhängigkeit der Motorleistung.

### Weg zur Ausführung der Erfindung

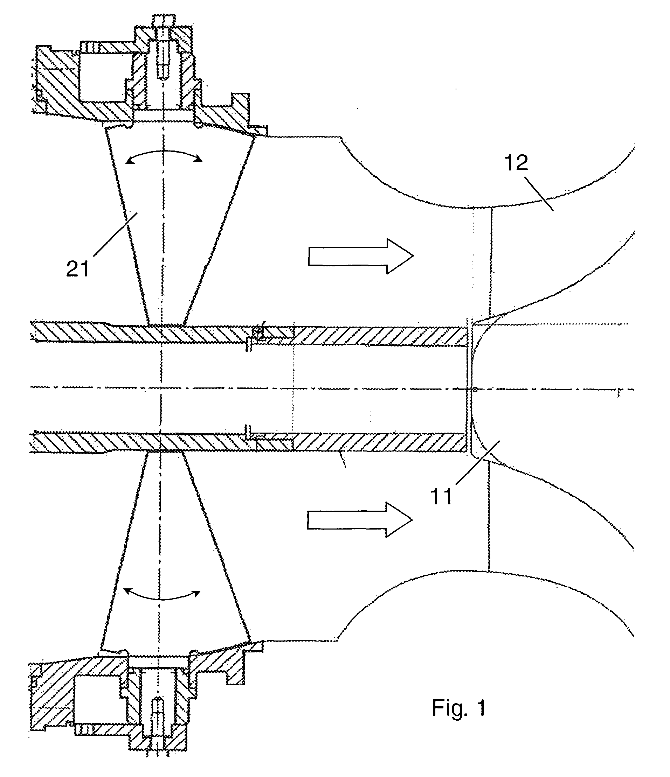

Fig. 1 zeigt einen Schnitt durch den Verdichtereintritt eines Abgasturboladers. Das Verdichterrad ist auf der rechten Seite ansatzweise angedeutet. Es umfasst eine Nabe 11 und auf der Nabe befestigte Laufschaufeln 12. Im Ansaugbereicht des Verdichters ist eine Vordrallvorrichtung angeordnet, welche mehrere Leitschaufeln 21 umfasst. Die Leitschaufeln sind in der dargestellten Ausführungsform radial zur Turbofaderwelle angeordnet und lassen sich jeweils um eine Achse drehen. Je nach Ausrichtung der Leitschaufeln ergibt sich eine mehr oder weniger starke Ablenkung der Luftströmung, so dass diese mit mehr oder weniger Drall beaufschlagt wird. Der Drall kann, sofern er denselben Drehsinn wie das Verdichterrad aufweist, zu einer Reduktion der Verdichterantriebsleistung und folglich, bei konstanter Tubinenleistung, zu einer Erhöhung der Rotordrehzahl führen.

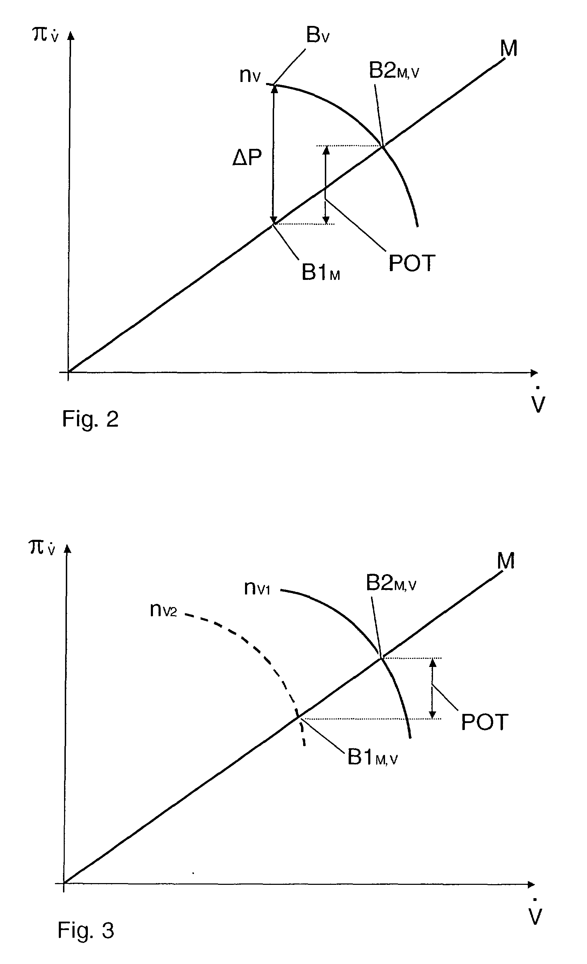

Im stationären Betrieb eines gedrosselten Verbrennungsmotors wird die vom Abgasturbolader geleistete Arbeit teilweise durch die Drosselung zunichte gemacht. Der mittels der Drosselklappe reduzierte Druck dient als Reserve und kann bei einer Lasterhöhung am Verbrennungsmotor sofort zugeschalten werden. Dadurch wird verhindert, dass die für die Lasterhöhung zusätzlich benötigte Luft erst nach einer Drehzahlerhöhung des Verdichters zu Verfügung steht. Wie aus Fig. 2 ersichtlich ist, wird ausgehend vom Betriebspunkt des Verdichters B_{V} durch Drosseln soviel Druck ΔP abgebaut, das gerade das Luftbedürfnis des Verbrennungsmotors gesättigt wird. Auf der Kurve entspricht dies dem Betriebspunkt des Verbrennungsmotors B1_{M}. Wird nun bei der erwähnten Lasterhöhung die Drosselung aufgehoben, wird der Verdichter rasch in den Betriebspunkt B2_{M,V} geführt und es steht dem Verbrennungsmotor sofort zumindest ein Teil der benötigten, zusätzlichen Luftmenge zu Verfügung. Das entsprechende Potential für die Leistungssteigerung ist in dem Diagramm mit dem Pfeil POT angedeutet. Die Drosselung sorgt somit vor für einen plötzlichen Lastwechsel, allerdings auf Kosten von Verlusten im stationären Betrieb.

Anders sieht es aus bei der erfindungsgemässen Regelung. Im stationären Zustand wird mit der Vordralleinrichtung ein Drall in Drehrichtung des Verdichters erzeugt. Der Drall am Eingang des Verdichterrades hat einerseits eine zusätzliche Erhöhung der Verdichterdrehzahl zur Folge. Andererseits führt der Drall jedoch auch dazu, dass die auf dem Kennfeld-Diagramm nach Fig. 3 die Drehzahllinie (Kurve n_{V2}) des Verdichters mit Vordrall gegenüber der Drehzahllinie (Kurve n_{V1}) des Verdichters ohne Drall nach links verschoben ist. Es wird dabei soviel Drall erzeugt, dass der Betriebspunkt des Verdichters mit dem Betriebspunkt des Verbrennungsmotors zusammenfällt B1_{M,V}. Dabei kommt dieser Betriebspunkt nahe an der Schluckgrenze des Verdichters zu liegen. Dies erfolgt, zumindest über den grössten stationären Betriebsbereich des Verbrennungsmotors ohne Drosselung und dementsprechend auch ohne Drosselungsverluste.

Bei einer plötzlichen Erhöhung der Motorlast können nun beim erfindungsgemässen Regelungssystem die Leitschaufeln der Vordrallvorrichtung zurückgestellt werden, so dass der erzeugte Vordrall reduziert wird oder ganz entfällt. Der nicht mehr vorhandene Drall am Eingang des Verdichters führt dazu, dass die Drehzahllinie auf dem Kennfeld-Diagramm wieder in ihre ursprüngliche Lage (Kurve n_{V1}) zurückgeht. Ohne dass die Drehzahl des Verdichters sich ändert, steht dem Verbrennungsmotor im Betriebspunkt B2_{M,V} die benötigte, zusätzliche Luft zu Verfügung. Ebenso wie bei gedrosselten Motoren, kann mit der erfindungsgemässen Regelung eine Ladedruckerhöhung ohne zeitaufwendige Rotorbeschleunigung erzeugt werden. Allerdings wird bei der erfindungsgemässen Regelung mit der Vordrallvorrichtung im stationären Betrieb des Verbrennungsmotors vor einer Lasterhöhung keine Verlustleistung erzeugt.

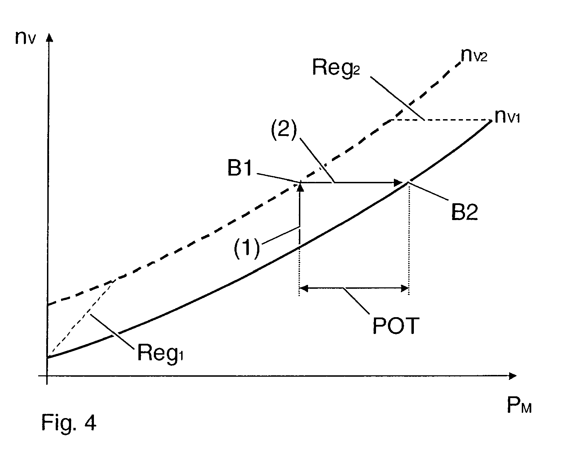

Der Verlauf der Lasterhöhung mittels dem erfindungsgemässen Regelungssystem wird in Fig. 4 nochmals anhand von einem Drehzahldiagramm aufgezeigt. Die Kurve nᵥ₁ stellt die minimal erforderliche Verdichterdrehzahl dar, um den zur Motorleistung (P_{M}) gehörigen Ladedruck zu erzeugen. Durch Erzeugen eines Vordralls wird die Drehzahl des Verdichters im stationären Betrieb erhöht (Pfeil (1) auf Kurve n_{V2}). Ausgehend von diesem Betriebspunkt B1 wird bei einer Lasterhöhung (Pfeil 2) der Drall abgebaut.

Ohne dass die Verdichterdrehzahl erhöht werden muss, steht dem Verbrennungsmotor zusätzliche Luft für die Leistungssteigerung zu Verfügung.

Im unteren Lastbereich, insbesondere im Leerlauf des Motors, muss normalerweise der Druck vor den Einlassventilen des Motors weit unter den Umgebungsdruck gesenkt werden. Wird dies mit der Vordralleinrichtung realisiert, befindet sich die ganze Verdichterstufe in Unterdruck. Dies würde bei einem konventionellen Turbolader verursachen, dass Schmieröl von Lagerraum in Luftraum des Verdichters angesaugt wird. Dem kann durch eine verbesserte Dichtung entgegengewirkt werden. Alternativ kann jedoch auch mittels einer Drosselklappe sichergestellt werden, dass der Druck am Verdichteraustritt nicht unter einen bestimmten Grenzwert fällt. Unterschreitet der Druck vor der Drosselklappe diesen Grenzwert, wird die Drosselklappe leicht geschlossen, und so dieser Grenzwert eingehalten. Dadurch würde die Motorleistung sinken. Der Motorregler würde dies jedoch erfassen und automatisch durch Öffnen des Vordrallgitters das richtige Druckniveau nach der Drosselklappe wieder einstellen. Als Grenzwert kann der Umgebungsdruck verwendet werden oder vorzugsweise ein leichter Unterdruck, je nach Öldichtungsmöglichkeiten. Mit dieser zusätzlichen Regelung ergibt sich beispielweise in Fig. 4 der Drehzahlverlauf Reg₁.

Im obersten Lastbereich kann es mit der vorgeschlagenen Regelung zu einer überhöhten Turboladerdrehzahl kommen. Wenn die Nennmotorleitung so hoch ist, dass dadurch die zulässige Turboladerdrehzahl überschritten wird, muss analog wie im vorigen Fall die Drosselklappe benutzt werden, um die Turboladerdrehzahl auf einem Maximalwert zu halten. Mit dieser zusätzlichen Regelung ergibt sich beispielweise in Fig. 4 der Drehzahlverlauf Reg₂.

### Bezugszeichenliste

- 11: Verdichterrad, Nabe
- 12: Verdichterrad, Laufschaufeln
- 21: Drallvorrichtung, drehbare Leitschaufeln
- B_{M}: Betriebspunkt Motor
- Bv: Betriebspunkt Verdichter
- B1: Betriebspunkt vor der Lasterhöhung
- B2: Betriebspunkt nach der Lasterhöhung
- M: Verbrennungsmotor Luftbedarf
- n_{V}: Drehzahl bzw. Drehzahllinie des Verdichters
- n_{V1}: Drehzahl bzw. Drehzahllinie des Verdichters, ohne Drall
- n_{V2}: Drehzahl bzw. Drehzahllinie des Verdichters, mit Drall
- Π_{V̇}: Druckverhältnis des Verdichters
- V̇: Ansaugluftmenge
- ΔP: Drosselung
- P_{M}: Leistung des Verbrennungsmotors
- POT: Potential für Leistungssteigerung
- Reg₁: Unterdruckregelung
- Reg₂: Überdrehzahlregelung

## Patentansprüche

1. Regelungssystem zur Regelung eines aufgeladenen Verbrennungsmotors, wobei das Regelungssystem eine Leistungsregelung zum Regeln der Verbrennungsmotor-Leistung und eine Ladedruckregelung zum Regeln des Abgasturbolader-Ladedrucks umfasst, **dadurch gekennzeichnet, dass**
die Leistungsregelung und die Ladedruckregelung von einem einzigen Regelungssystem durchgeführt werden, und dass
das Regelungssystem die Leistung des Verbrennungsmotors und den Ladedruck des Abgasturboladers über den Vordrall am Verdichtereingang regelt.

2. Regelungssystem nach Anspruch 1, **dadurch gekennzeichnet, dass** das Regelungssystem die Leistung und den Ladedruck über einen grossen Leistungsbereich des Verbrennungsmotors regelt.

3. Regelungssystem nach Anspruch 2, **dadurch gekennzeichnet, dass** das System eine Drosselklappe umfasst, und dass der Ladedruck im Bereich eines minimalen Wertes mittels einer Drosselklappe regelbar ist.

4. Regelungssystem nach einem der Ansprüche 2 oder 3, **dadurch gekennzeichnet, dass** das System eine Drosselklappe umfasst, und dass die Drehzahl des Abgasturboladers im Bereich eines maximalen Wertes mittels einer Drosselklappe regelbar ist.

5. Verfahren zum Betreiben eines aufgeladenen Verbrennungsmotors, **dadurch gekennzeichnet, dass** im stationären Betrieb durch Erhöhung des Dralls der dem Verdichter des Abgasturboladers zugeführten Luft der stationäre Betriebspunkt des Verdichters im Bereich der Schluckgrenze zu liegen kommt, und dass bei einer Lasterhöhung des Verbrennungsmotors durch Reduktion des Dralls eine verzögerungsfreie Ladedruckerhöhung erzielt wird.
